# EUROPEAN PATENT APPLICATION

(11) **EP 1 450 432 A2**
(43) Date of publication of application: **25.08.2004**
(21) Application number: 04003796.2
(22) Date of filing: 19.02.2004
(51) Int. Cl.: H01M 8/24, H01M 8/02

(54) **Polymer electrolyte fuel cell**

(30) Priority: 20.02.2003 JP 2003043004; 14.04.2003 JP 2003108880
(71) Applicant: MATSUSHITA ELECTRIC INDUSTRIAL CO., LTD., Kadoma-shi, Osaka 571-8501 (JP)
(72) Inventor: Matsumoto, Toshihiro, Takatsuki-shi, Osaka 569-1144 (JP); Tomizawa, Takeshi, Ikoma-shi, Nara 630-0123 (JP); Kokawa, Katsuzou, Uda-gun, Nara 633-0254 (JP); Kanbara, Teruhisa, Toyonaka-shi, Osaka 560-00056 (JP); Kobayashi, Susumu, Ikoma-shi, Nara 630-0134 (JP); Hatoh, Kazuhito, Osaka-shi, Osaka 536-0015 (JP); Kusakabe, Hiroki, Sakai-shi, Osaka 590-0113 (JP); Ohara, Hideo, Katano-shi, Osaka 576-0016 (JP); Takeguchi, Shinsuke, Osaka-shi, Osaka 538-0052 (JP); Shibata, Soichi, Hirakata-shi, Osaka 573-1149 (JP)
(74) Representative: Schirdewahn, Jürgen, Dr.

(57) **Abstract**

The invention aims at providing a fuel cell capable of highly efficient and stable operation, by eliminating the flooding caused by condensed water and generated water during low-load operation, and by inhibiting the increase in the pressure drop at high loads. A fuel cell that does not flood, particularly during low-load operation, in accordance with the invention is realized by forming multiple independent gas flow channels having independent inlet-side and outlet-side manifold holes in the separator surface, and by connecting these in series or in parallel.
This connection can be obtained through switching means characterised in that:
the inlets and outlets of such switchable channel means are maintained in both operational modes in a manner that in both operational modes the switchable channel means are fed by their fluid in the same direction of circulation.

## Description

### [Technical Field of the Invention]

The present invention relates to a fuel cell used in portable power supplies, power supplies for electric vehicles, home cogeneration systems, etc., and particularly it relates to a polymer electrolyte fuel cell that utilizes a polymer electrolyte.

### [Prior Art]

A fuel cell that uses a polymer electrolyte simultaneously generates power and heat, by electrochemically reacting a fuel gas containing hydrogen and a fuel gas containing oxygen (e.g., air). This fuel cell is composed basically of a polymer electrolyte membrane that selectively transports hydrogen ions as well as a pair of electrodes (i.e., anode, cathode) formed on both surfaces of the polymer electrolyte membrane. The aforementioned electrodes are composed of a catalyst layer that consists principally of carbon powder that supports a platinum-group metal catalyst and that is formed on the surface of the polymer electrolyte membrane as well as a gas diffusion layer that is formed on the outer surface of the catalyst layer and that combines both air permeability and electron conductivity.

A predetermined voltage is obtained by connecting multiple cells composed of a polymer electrolyte membrane and a pair of electrodes that enclose it. For this purpose, a stack is made by interposing an electrically conductive separator between the cells and then superimposing the cells. When fuel gas and oxidant gas are supplied to both sides of a separator and fuel gas and oxidant gas are supplied to the respective gas diffusion electrodes, ion conduction in the polymer electrolyte membrane and the chemical reaction of each gas dispersion electrode progress, so a voltage is generated between a pair of gas diffusion electrodes, and power is supplied to an external circuit via a pair of separators on both ends, which function as collector electrodes. During such power generation, the gas utilization is increased, thereby improving the power generation efficiency and output performance, by supplying as uniformly as possible the supply gas to the electrode surface of a gas diffusion electrode.

A gas sealing material and gasket are disposed around the electrode so as to enclose the polymer electrolyte membrane, to prevent the oxidant gas and fuel gas supplied to the electrode from leaking out and to prevent the intermixing of the two types of gas. This gas sealing material and gasket are preassembled by integrating the electrode and polymer electrolyte membrane. This is called MEA (membrane-electrode assembly). Outside the MEA is disposed an electrically conductive separator for mechanically attaching this and for electrically interconnecting in series adjacent MEAs. Where the separator contacts the MEA, gas flow channels are formed to supply reactant gas to the electrode surface and to carry away generated water and excess gas. These gas flow channels also can be provided separately from the separator. In the general method, however, the gas flow channels are made by providing grooves on the surface of the separator.

To supply reactant gas to this gas flow channel, a pipe jig is required. Said pipe jig branches to each separator used, and the branch ends connect directly to the grooves. This jig is called a manifold, and the type that connects directly from the aforementioned type of gas supply lines is called an external manifold. The type of this manifold with a simpler structure is called an internal manifold. In an internal manifold, holes that pass through the separator in which the gas flow channel groove is formed are provided, the inlet and outlet of the gas flow channel pass to these holes, and reactant gas is supplied directly through this hole.

The laminated cell generally is structured as follows: 10-200 cells are laminated by alternately superimposing this MEA, separator, and cooling block, after which these are enclosed by end plates via collector plates and insulating plates, and a fastening rod is used to lock from both ends.

The configuration of the separator's gas flow channel for supplying gas to the gas diffusion electrode is important with respect to not only the gas utilization, but also the efficient collection of current generated in the gas diffusion electrode and the removal of heat generated in the gas diffusion electrode. In conventionally proposed configurations, the gas flow channels formed on the separator sides are the wavy, serpentine type and there are multiple flow channels in parallel, as for example disclosed in the Publications of Examined JP Patent Applications No. 50-8777 and No. 7-263003.

A perfluorosulfonate material has been used as the polymer electrolyte in this type of cell. This polymer electrolyte membrane conducts ions in the hydrated state, so it normally is necessary to humidify the fuel gas and oxidant gas before supplying them to the cell. Also, the reaction generates water on the cathode side, so if the supplied gas has been humidified so as to have a higher dew point than the operating temperature of the cell, the following problem results: Condensation occurs within the electrode and the gas flow channel within the cell, so phenomena such as water-clogging destabilize or degrade the cell performance. The cell performance degradation or operational instability that results from such over-humidification is called flooding phenomenon. When a fuel cell is used as a power-generation system, it is necessary to systematically include supply gas humidification, etc. To simplify the system and improve system efficiency, it is preferable to lower the dew point of the humidified gas, even if only slightly.

On the other hand, in the polymer electrolyte fuel cell, to maintain high power generation efficiency while adequately exhibiting the ion conductivity of the polymer electrolyte, it is necessary to increase the water vapor concentration by humidifying the supplied gas; moreover, water is generated on the cathode side. In the gas flow channel, therefore, there is considerable water generated by the reaction on the downstream side, particularly on the outlet side, so the gas flow grooves might become blocked by water that transitioned to the liquid state. This phenomenon is called flooding. To prevent this flooding, the following technique has been proposed. As for example disclosed in Publication of Unexamined JP Patent Application No. 10-106594.

That is, the gas flow channel of the separator is composed of an inlet-side flow channel groove and an outlet-side flow channel groove that are connected to the inlet-side manifold and the outlet-side manifold, respectively; and an intermediate flow channel groove that communicates with the inlet-side flow channel groove and the outlet-side flow channel groove. The inlet-side flow channel groove and the outlet-side flow channel groove are lattice-shaped. The intermediate flow channel groove is looped back multiple times to form multiple, parallel, independent flow channel grooves. The looped-back part of the independent flow channel groove is regarded as lattice-shaped flow channel groove.

As discussed previously, gas normally is supplied after humidifying it to a dew point slightly lower than the cell temperature, to prevent the flooding phenomenon, to improve system efficiency, to simplify the system, etc.

To improve cell performance, however, it is necessary to improve the ion conductivity of the polymer electrolyte membrane. For this reason, it is preferable to supply gas humidified to a relative humidity near 100% or a relative humidity of at least 100%. Also, it was determined to be preferable to supply gas at high humidity, from the viewpoint of polymer electrolyte membrane durability. When an attempt is made to supply gas with a relative humidity close to 100%, the aforementioned flooding becomes a problem.

An effective technique for avoiding flooding is to blow away the condensed water by increasing the flow rate of the supply gas in the separator flow channel region. However, to increase the supply gas flow rate, it becomes necessary to supply gas at high pressure. Therefore, the auxiliary power (e.g., gas supply blower or compressor) during systematization must be increased dramatically, which degrades system efficiency. Also, when the flooding phenomenon occurs on the anode side, a fuel gas deficiency results, which is fatal to the cell. The reason is that, when a load current is drawn forcibly when there is insufficient fuel gas, electrons and protons are created in the fuel-less state, so the carbon supporting the anode catalyst reacts with the atmospheric water. As a result, the catalyst layer's carbon leaches out, thereby destroying the catalyst layer of the anode.

Also, in a system with a laminated cell, taking into consideration marketability, it is essential not only to operate the cell under the rated power-output conditions, but also to operate at a low load, where output is controlled in accordance with the power demand. To maintain efficiency during low-load operation, the utilization of fuel gas and oxidant gas must be under the same conditions as those for the rated operation. That is, if the load is kept at one-half, for example, during rated operation, unless the flow volumes of fuel gas and oxidant gas are reduced to approximately one-half, additional fuel gas and oxidant gas will be used, which will reduce the power generation efficiency. However, if low-load operation is performed with the gas utilization held constant, the flow rates of the gases within the gas flow channels are reduced, so it is impossible to discharge condensed water and generated water from the separator, which causes the problem that cell performance is degraded and becomes unstable.

In one method developed to prevent such flooding (disclosed in *Proceedings of the 43*^{*rd*} *Battery Symposium,* 1D17 (October 2, 2002)), gas flow channels divided into multiple sections are created within the surface of the separator, and these are switched in series or in parallel, thereby ensuring the gas flow rate during low-load operation, which prevents the flooding phenomenon, thereby preventing increased pressure drop during rated operation. In this method, the inlet and outlet of a divided flow channel are connected with those of the adjacent flow channel in the common manifold, and the flow channel is switched by switching these manifold holes to inlet, outlet or sealed. In an actual system, a device such as a humidifier is connected to the gas inlet, and a device such as a heat exchanger is connected to the discharge port, so to use the system after switching the manifold holes to inlet or outlet as aforementioned. For this purpose an extremely complex valve switching operation becomes necessary. Also, the upstream flow channel and the downstream flow channel are connected by one manifold hole, so when divided flow channels are connected in series, by reverse of the direction of circulation the condensed water that condensed in the manifold holes of the connected region will be resupplied to the downstream flow channel. This presents the problem of a higher risk of the flooding phenomenon as a result of downstream water-clogging.

To prevent supply gas stasis caused by the flooding of reaction-generated water, various gas flow channel grooves have been devised over the years: A type in which the gas flow channel is lattice-shaped, and a type in which there is one flow channel from the inlet to the outlet. In the lattice type, although there is no water pooling that leads to flooding, water discharge performance is inferior. (For example, gas diffusion performance has poor overall uniformity, so partial clogging occurs.) Also, in the type with a single flow channel, gas diffusibility is good, but the flow resistance increases, so it becomes necessary to increase the source pressure on the gas supply device side, thereby increasing the auxiliary power and reducing system efficiency.

In the configuration of Patent Document 3, gas diffusibility is increased in the inlet-side flow channel groove section and the reaction in this section is promoted, to raise the overall electric conversion energy efficiency, so the reaction is concentrated in the inlet-side flow channel groove section, and the polymer electrolyte membrane and the catalyst layer of the gas diffusion electrode are degraded, so durability remains a problem. Also, in the outlet-side flow channel groove section, flooding is prevented by ensuring water dischargeability by enlarging the cross-sectional area of the flow channel. However, because the cross-sectional area of the flow channel is large, the gas flow is distributed unevenly so it is nonuniform. Moreover, in the section with a low flow rate, the following state results: The generated water blocks a part of the flow channel groove. Therefore, gas cannot be supplied to this section, so flooding cannot be preventing completely.

When the fuel cell is used as a power-generation system, it is necessary to perform systematization that includes supply gas humidification, etc. To simplify the system and improve system efficiency, it is preferable to supply the supply gas after reducing its humidification dew point, even if only slightly. As aforementioned, before it is supplied, the supply gas normally is humidified at a dew point slightly lower than the cell temperature, with the objectives of preventing the flooding phenomenon, improving system efficiency, simplifying the system, etc.

To improve cell performance, however, it is necessary to increase the ion conductivity of the polymer electrolyte membrane. For that purpose, it is preferable to provide supply gas humidification at a humidity either near 100% relative humidity or at least 100% relative humidity. From the viewpoint of polymer electrolyte membrane durability, also, it is necessary to supply gas at high humidity. When an attempt is made to provide supply gas humidified at a humidity near 100% relative humidity, the aforementioned flooding becomes a problem.

An effective technique for avoiding flooding is to increase the flow rate of the supply gas in the separator flow channel section, in order to blow out the condensed water. However, to increase the supply gas flow rate, it is necessary to supply the gas at high pressure. Therefore, it is necessary to drastically increase the systematized auxiliary power (e.g., gas supply blower, compressor), which results in degradation of system efficiency. Also, when the flooding phenomenon occurs on the anode side, a shortage of fuel gas develops, which is fatal to the cell. The reason is that, when a load current is drawn forcibly when there is insufficient fuel gas, electrons and protons are created in the fuel-less state, so the carbon supporting the anode-side catalyst ends up reacting with the atmospheric water. As a result, the catalyst layer's carbon leaches out, thereby destroying the anode's catalyst layer.

In a system with a laminated fuel cell, taking into consideration marketability, it is essential not only to operate the cell under the rated power-output conditions, but also to operate at a low load, where the output is controlled in accordance with the power demand. To maintain efficiency during low-load operation, the utilization of fuel gas and oxidant gas must be under the same conditions as during rated operation. That is, if the load is kept at one-half, for example, during rated operation, unless the flow volumes of the fuel gas and oxidant gas are reduced to approximately one-half, additional fuel gas and oxidant gas will be used, which will reduce the power generation efficiency. However, if low-load operation is performed with the gas utilization held constant, the flow rates of the gases within the gas flow channels are reduced, so it is impossible to discharge condensed water and generated water from the separator, which causes the following problem: The aforementioned flooding phenomenon occurs, which degrades and destabilizes cell performance.

### [Summary of the Invention]

An object of the present invention is to provide for a polymer electrolyte fuel cell which is highly reliable and reduces or even avoids the risk of flooding.

This object is solved by the features of claim 1.

In the preamble of claim 1 reference is made to the already earlier discussed fuel cell according to *Proceedings of the 43*^{*rd*} *Battery Symposium,* 1D17 (October 2, 2002). The configuration of the fuel cell of the invention and the realization of the switching operation (cf. claim 2) are very simple and effective.

With the fuel cell of the invention not only the gas flow rate can be equalized or even made equal independent of the generated power. Furthermore, water generated within the channel means during operation is always transported in the same direction, the constant direction of circulation within the channel means independent from the operation mode, i.e. operation in parallel or in series.

For example, the polymer electrolyte fuel cell according to the invention can be configurated according to the already earlier discussed Publication of Examined JP Patent Application No. 50-87. Particularly, a plurality of channel means can be arranged in parallel in the same fuel cell (cf. claim 9) and the inlets of the fluid, which is fed to the channel means, are arranged independent from the operational modes on one side of the fuel cell and the outlets of the mentioned fluid as well are arranged independent from the operational modes on one side of the fuel cell, the mentioned sides of the fuel cell preferably being different or even opposite.

The subclaims concern preferable embodiments of the invention. Special reference is made to the claims 8 and 9 which describe embodiments which can be realized not only alternatively but also in combination within the same cell stack.

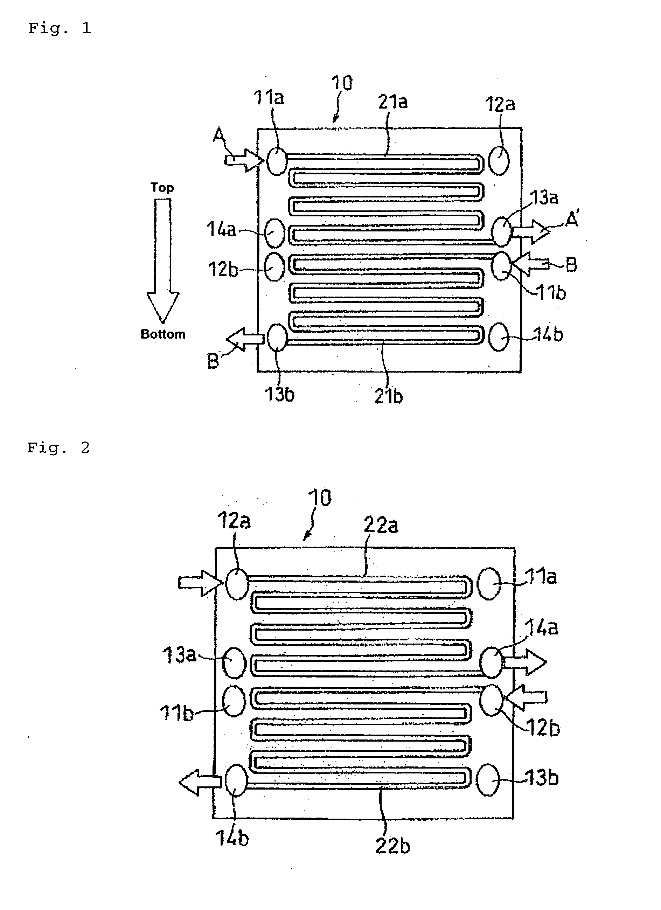

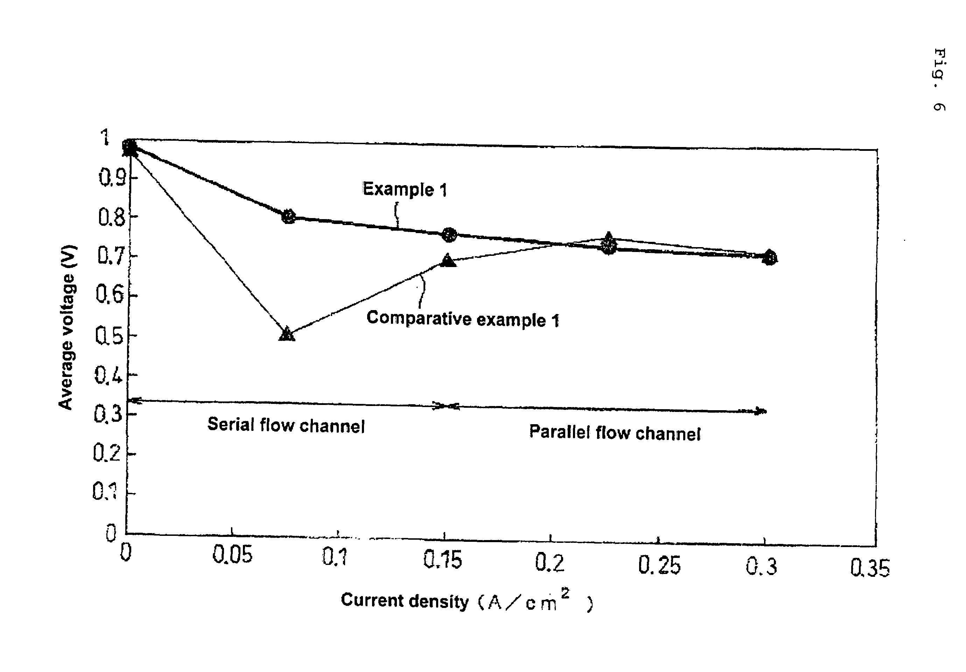

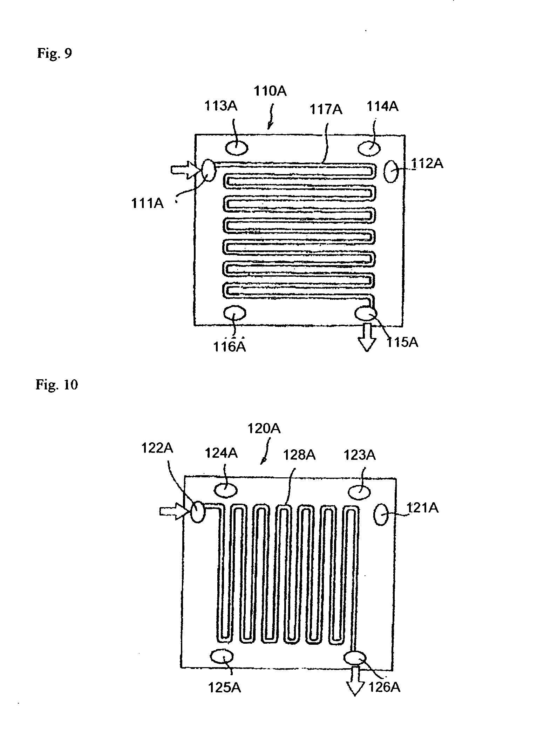

The embodiment of claim 8 is described more in detail in Fig. 1 to Fig. 8 and the embodiment of claim 9 is described in more detail in Fig. 9 to Fig. 19.

Before going in these details still the following remarks have to be made more in general.

### [Aspects of the Invention]

According to one aspect the fuel cell of the present invention is equipped with a cell stack, which is a single-cell laminate composed of a hydrogen ion-conductive polymer electrolyte membrane, a pair of electrodes disposed on both sides of the aforementioned polymer electrolyte membrane, and a pair of electrically conductive separators having a means of supplying/discharging fuel gas to/from one of the aforementioned electrodes and supplying/discharging oxidant gas to/from the other electrode; has multiple independent gas flow channels having independent inlet-side and outlet-side manifold holes on the surface facing at least one electrode of the aforementioned electrically conductive separator; and is configured so as to operate by switching, in series or in parallel, the aforementioned multiple gas flow channels.

Here, it is preferable to have a means of connecting in series the aforementioned multiple independent gas flow channels, by using a pipe provided on the outside of the separator to connect the outlet-side manifold hole of the upstream gas flow channel and the inlet-side manifold hole of the downstream gas flow channel.

It is preferable to equip the cell with a mist trap at the connection between the outlet-side manifold hole of the aforementioned upstream gas flow channel and the inlet-side manifold hole of the downstream gas flow channel.

It is preferable to provide the gas flow channels of the aforementioned electrically conductive separator, in such a manner that the direction of flow of this gas never opposes the force of gravity.

The aforementioned multiple independent gas flow channels may be only in the anode or cathode, but it is desirable to provide independent gas flow channels in both the anode and cathode.

The point of the present invention is that cell performance degradation or instability phenomena during low-load operation is avoided by providing multiple independent gas flow channels having independent manifold inlet/outlet means or holes in the surface of the separator, and by means of simple valve switching in the fuel cell system.

A conventional fuel cell separator is structured such that each gas (i.e., fuel gas, oxidant gas) is supplied from one inlet-side manifold (hole) to the gas flow channel of the separator, and is discharged through one outlet-side manifold (hole). To improve the marketability of a fuel cell power generation system, it is necessary to vary the fuel cell load according to the power demand, without reducing the power generation efficiency. For this purpose, it is necessary to operate by increasing the flow volumes of the fuel gas and oxidant gas to the flow volumes appropriate when increasing the load relative to the rated power output, and by decreasing the flow volumes of the fuel gas and oxidant gas to the flow volumes appropriate when decreasing the load relative to the rated power output.

Normally, the gas flow channels provided in the electrically conductive separator of a fuel cell are designed to have the optimal flow rates at the rated power output. Consequently, after the power load increases, the gas flow rate of a gas flow channel increases with the increase in the gas flow volume. After the power load decreases, the gas flow rate of a gas flow channel decreases with the decrease in the gas flow volume. After the gas flow rate of a gas flow channel increases, the supply gas pressure drop increases, so even though the power generation efficiency drops slightly as the result of an increase in auxiliary power, the gas flow rate of the gas flow channel increases. Therefore, the condensed water and generated water in the gas flow channels of the separator can be eliminated rather efficiently, so the flooding phenomenon does not occur. However, when the power load is reduced, the gas flow rate of the gas flow channel also decreases with the decrease in the gas flow volume. After the gas flow rate of a gas flow channel is decreased, it becomes difficult to efficiently eliminate the condensed water and generated water in the gas flow channel of the separator, depending on the decrease in the flow rate, which causes the flooding phenomenon. Here, despite the decrease in the electric power load, if the supply gas flow volume is not decreased, the proportion of auxiliary power to generated power output becomes relatively high, thereby reducing the power generation efficiency of the overall power generation system.

The present invention realizes a fuel cell in which flooding does not occur, particularly during low-load operation, by forming multiple independent gas flow channels having independent inlet-side and outlet-side manifold holes in the surface of the separator, and by connecting these in series or in parallel. For example, when the ratio between the maximum-load power generation output and minimum-load power generation output is 4:1, four independent gas flow channels are formed in the surface of the separator; gas is supplied in parallel to all gas flow channels during maximum-load power generation; and all four gas flow channels are connected in series during minimum-load operation, after which gas is supplied. Also, during medium load operation, two adjacent gas flow channels of the four flow channels are connected in series, after which gas is supplied. In this manner, it is possible to maintain the same gas flow rates in all gas flow channels, even when the load varies.

Also, when the gas flow channels are connected in series, the independent manifold holes are connected by using a pipe outside the separator to connect each gas flow channel. As a result, it becomes possible to discharge to the outside of the separator the condensed water that condensed in the middle manifold holes, and the condensed water is not supplied to the downstream flow channel, so stable operation is possible.

Furthermore, by inserting a mist trap in the manifold hole connection, it becomes possible to reliably discharge the condensed water. Furthermore, to facilitate the discharge of condensed water, it is desirable to flow the gas flowing in each gas flow channel in a direction that does not oppose the force of gravity. If the cell is configured such that the gas flow direction does not change after each gas flow channel is switched in series and in parallel, the gases always can be flowed without opposing the direction of gravity, thereby enabling more stable operation.

In accordance with a further aspect of the present invention a polymer electrolyte fuel cell is equipped with
(1) a cell laminate containing at least two types of cells A and B composed of a polymer electrolyte membrane, an anode and a cathode that enclose it, a cathode-side separator having an oxidant gas flow channel that supplies oxidant gas to the aforementioned cathode, and an anode-side separator having a fuel gas flow channel that supplies fuel gas to the aforementioned anode;
(2) each pair of oxidant gas manifolds connected to the aforementioned oxidant gas flow channel and each pair of fuel gas manifolds connected to the fuel gas flow channel; and
(3) a gas supply and discharge means that adopts first power generation mode in which at least either oxidant gas or fuel gas is supplied, in parallel, to cell A and cell B, as well as second power generation mode in which at least either oxidant gas or fuel gas is supplied in series to cell A and cell B.

To be more specific, it is equipped with a gas supply and discharge means such that, in at least either the aforementioned oxidant gas manifold or fuel gas manifold, at least the inlet-side manifold differs between cell A and cell B, and that adopts first power generation mode in which the relevant gas from each relevant different inlet-side manifold is supplied, in parallel, to cell A and cell B as well as second power generation mode in which the outlet-side manifold of the relevant gas of cell A and cell B is connected in series and the relevant gas is supplied in series to cell A and cell B, with the cell B inlet-side manifold as the outlet-side manifold.

As a result, even when the load fluctuates, it is possible to maintain the same gas flow rate in all gas flow channels, so it is possible to avoid the instability phenomenon or a drop in cell performance during low-load operation.

In accordance with another aspect of the present invention a polymer electrolyte fuel cell is equipped with
(a) a cell laminate containing at least two types of cells A and B composed of a polymer electrolyte membrane, an anode and a cathode that enclose it, a cathode-side separator having an oxidant gas flow channel that supplies oxidant gas to the aforementioned cathode, and an anode-side separator having a fuel gas flow channel that supplies fuel gas to the aforementioned anode;
(b) each pair of oxidant gas manifolds connected to the aforementioned oxidant gas flow channel and each pair of fuel gas manifolds connected to the fuel gas flow channel; and
(c) a gas supply and discharge means such that, in at least either the aforementioned oxidant gas manifold or fuel gas manifold, at least the inlet-side manifold differs between cell A and cell B; and that adopts first power generation mode in which the relevant gas from each relevant different inlet-side manifold is supplied, in parallel, to cell A and cell B as well as second power generation mode in which the outlet-side manifold of the relevant gas of cell A and cell B is connected in series and the relevant gas is supplied in series to cell A and cell B, with the cell B inlet-side manifold as the outlet-side manifold.

In the preferred mode, the present invention is equipped with a gas supply and discharge means such that, in both the aforementioned oxidant gas manifold and the fuel gas manifold, at least the inlet-side manifold differs between cell A and cell B; and that adopts first power generation mode in which the oxidant gas and fuel gas are each supplied in parallel from each relevant different inlet-side manifold to cell A and cell B as well as second power generation mode in which the oxidant gas outlet-side manifold and fuel gas outlet-side manifold of cell A and cell B are each connected in series and the oxidant gas and fuel gas are each supplied in series to cell A and cell B, with the cell B inlet-side manifold as the outlet-side manifold.

In accordance with still a further aspect of the present invention a polymer electrolyte fuel cell is equipped with
(a) a cell laminate containing at least two types of cells A and B composed of a polymer electrolyte membrane, an anode and a cathode that enclose it, a cathode-side separator having an oxidant gas flow channel that supplies oxidant gas to the aforementioned cathode, and an anode-side separator having a fuel gas flow channel that supplies fuel gas to the aforementioned anode;
(b) the following types of manifold holes provided so as to pass through each aforementioned cell laminate: (b1) oxidant gas inlet-side manifold hole connected to the oxidant gas flow channel of aforementioned cell A, oxidant gas inlet-side manifold hole connected to the oxidant gas flow channel of aforementioned cell B, and oxidant gas outlet-side manifold hole connected to the oxidant gas flow channel of aforementioned cell A and cell B, and (b2) fuel gas inlet-side manifold hole connected to the fuel gas flow channel of aforementioned cell A, fuel gas inlet-side manifold hole connected to the fuel gas flow channel of aforementioned cell B, and fuel gas outlet-side manifold hole connected to the fuel gas flow channel of aforementioned cell A and cell B, and
(c) a gas supply and discharge means that adopts first power generation mode in which the oxidant gas and fuel gas are each supplied, in parallel, to cell A and cell B from the oxidant gas inlet-side manifold hole and the fuel gas manifold hole of aforementioned cell A and cell B as well as second power generation mode in which the aforementioned oxidizing agent outlet-side manifold and fuel gas outlet-side manifold hole of cell A and cell B are each connected in series and the oxidant gas and fuel gas are each supplied in series to cell A and cell B, with the cell B inlet-side manifold as the outlet-side manifold.

It is preferable to have manifolds connected to both the aforementioned oxidant gas manifold holes and fuel gas manifold holes and a switching means that opens and closes the connection channel of each manifold.

It also is preferable to configure so as to operate the switching means that opens and closes the aforementioned connection channels in accordance with the aforementioned power generation mode.

The present invention is based on the discovery that, during low-load operation, cell performance degradation and the instability phenomenon are avoided by switching appropriately the supply of gas to the manifold holes, after providing at least two inlet-side manifold holes among the pairs of manifold holes provided in the separator.

That is, at least two types of separator pairs are provided, said pairs enclosing a membrane-electrode assembly (MEA) composed of a polymer electrolyte membrane and an anode and cathode enclosing it. The constructed cell laminate contains cell A enclosed by the first separator pair and cell B enclosed by the second separator pair. Gas is supplied to cell A from the first inlet-side manifold hole, and gas is supplied to cell B from the second manifold hole. This allows gas to be supplied, in parallel, to cell A and cell B. Also, if the outlet-side manifold holes of cell A and cell B are connected in series and gas is supplied from the first inlet-side manifold hole, gas flows in series through cell A and cell B, and is discharged from the second inlet-side manifold hole.

In this manner, either, and preferably both, the oxidant gas and fuel gas can be supplied to cell A and cell B, in parallel or in series, in accordance with the load, so it is possible to hold constant the flow rate of gas in the gas flow channel, regardless of the load. This prevents the drop in cell performance and instability phenomenon during low-load operation.

In the configuration of a conventional fuel cell, both the fuel gas and oxidant gas are supplied from one gas inlet-side manifold to the gas flow channel of the separator, after which they are discharged via one gas outlet-side manifold. To improve the marketability of a fuel cell power generation system, it is desirable to vary the fuel cell load according to the power demand, without reducing the power generation efficiency. For this purpose, it is preferable to operate by increasing the flow volumes of the fuel gas and oxidant gas to the appropriate flow volumes when increasing the load relative to the rated power output, and by decreasing the flow volumes of the fuel gas and oxidant gas to the appropriate flow volumes when decreasing the load relative to the rated power output.

Normally, the gas flow channels provided in the electrically conductive separator used in a fuel cell are designed to have the optimal flow rates at the rated power output. Consequently, when the power load increases, the gas flow rate of a gas flow channel increases with the increase in the gas flow volume; and when the power load decreases, the gas flow rate of a gas flow channel decreases with the decrease in the gas flow volume. After the gas flow rate of a gas flow channel increases, the supply gas pressure drop increases, so even though the power generation efficiency drops slightly as the result of an increase in auxiliary power, the gas flow rate of the gas flow channel increases. Therefore, the condensed water and generated water in the gas flow channels of the separator can be eliminated rather efficiently, so the flooding phenomenon does not occur. However, when the power load is reduced, the gas flow rate of the gas flow channel also decreases with the decrease in the gas flow volume. After the gas flow rate of a gas flow channel decreases, it becomes difficult to efficiently eliminate the condensed water and generated water in the gas flow channel of the separator, depending on the decrease in the flow rate, which causes the flooding phenomenon. Here, despite the decrease in the electric power load, if the supply gas flow volume is not decreased, the proportion of auxiliary power to generated power output becomes relatively high, thereby reducing the power generation efficiency of the overall power generation system.

As aforementioned, the present invention realizes a fuel cell in which flooding does not occur, particularly during low-load operation, by switching in series and in parallel, via manifolds, the supply of gas to cells having different inlet-side manifold inlet means or holes. For example, when the ratio between the maximum-load power generation output and minimum-load power generation output is 2:1, two gas inlet-side manifolds are provided, and cell A of the gas flow channel connected to the first manifold and cell B of the gas flow channel connected to the second manifold are laminated alternately. During high-load power generation, gas is supplied, in parallel, to the first and second gas inlet-side manifolds. Also, during minimum-load operation, gas is supplied from the first gas inlet-side manifold, the second gas inlet-side manifold is used as the outlet; and during high-load operation, the manifold that functions as the outlet is closed by means of a pipe outside the separator, thereby supplying gas with the cells connected in series. In this manner, it is possible to maintain the same gas flow rates in all gas flow channels, even when the load varies.

When the gas flow channels are connected in series, the independent manifold holes of each gas flow channel are connected outside of the separator by means of a pipe. As a result, the condensed water that condensed at the intermediate manifold holes can be discharged from the separator, so condensed water is not supplied to the downstream flow channel, which yields stable operation.

Furthermore, it is possible to reliably discharge the condensed water, by inserting a mist trap in the connection region of the manifold hole. Here, it is preferable to dispose adjacently the cells connected in series via the manifolds.

These enable the realization of a fuel cell in which flooding does not occur, particularly during low-load operation.

### [Brief Explanation of Drawings]

Fig. 1 is a front view of cathode side of electrically conductive separator used in the fuel cell of Embodiment 1 of the present invention.
Fig.2 is a front view of anode side of the same separator.
Fig. 3 is a diagram showing the switching of the gas flow channel on the cathode side of the same separator.
Fig. 4 is an oblique view showing the cathode-side piping in the laminated fuel cell of Embodiment 1 of the present invention.
Fig. 5 is an oblique view showing the cathode-side piping in the laminated fuel cell of Embodiment 2 of the present invention.
Fig. 6 is a diagram showing the current-voltage characteristic of the fuel cell of Example 1 of the present invention.
Fig. 7 is a diagram showing the current-voltage characteristic of the fuel cell of Example 2 of the present invention.
Fig. 8 is a diagram showing the voltage variation over time of the fuel cell of Example 3 of the present invention.
Fig. 9 is a front view of the cathode-side separator of cell A in the fuel cell of Embodiment 4 of the present invention.
Fig. 10 is a front view of the anode-side separator of cell A in the fuel cell of Embodiment 3 of the present invention.
Fig. 11 is a front view of the cathode-side separator of cell B in the fuel cell of Embodiment 3 of the present invention.
Fig. 12 is a front view of the anode-side separator of cell B in the fuel cell of Embodiment 3 of the present invention.
Fig. 13 is a front view of the cathode-side separator, showing the flow of the oxidant gas of cell A when reactant gas is supplied serially to cell A and cell B in the fuel cell of Embodiment 3 of the present invention.
Fig. 14 is a front view of the anode-side separator, showing the flow of the oxidant gas of cell A when reactant gas is supplied serially to cell A and cell B in the fuel cell of Embodiment 3 of the present invention.
Fig. 15 is a front view of the cathode-side separator, showing the flow of the oxidant gas of cell B when reactant gas is supplied serially to cell A and cell B in the fuel cell of Embodiment 3 of the present invention.
Fig. 16 is a front view of the anode-side separator, showing the flow of the oxidant gas of cell B when reactant gas is supplied serially to cell A and cell B in the fuel cell of Embodiment 3 of the present invention.
Fig. 17 is an oblique view showing the overall configuration of the fuel cell of Embodiment 3 of the present invention.
Fig. 18 is an oblique view showing the overall configuration of the fuel cell of Embodiment 2 of the present invention.
Fig. 19 is a diagram showing the voltage change in continuous power generation tests of the fuel cell of Example 4 of the present invention.

### [Description of the Drawings]

### Embodiment 1

Fig. 1 is a front view of the cathode side of the electrically conductive separator. Fig. 2, its rear view, is a front view of the anode side. This electrically conductive separator 10 has the following: For oxidant gas, first and second inlet-side manifold holes 11A, 11b and first and second outlet-side manifold holes 13a, 13b; and for fuel gas, first and second inlet-side manifold holes 12a, 12b and first and second outlet-side manifold holes 14a, 14b. This separator 10 has the following: on the cathode-side surface, first gas flow channel 21a from first inlet-side manifold hole 11A to first outlet-side manifold hole 13a, and second gas flow channel 21b from second inlet-side manifold hole 11b to second outlet-side manifold hole 13b; and on the anode-side surface, first gas flow channel 22a from first inlet-side manifold hole 12a to first outlet-side manifold hole 14a, and second gas flow channel 22b from second inlet-side manifold hole 12b to second outlet-side manifold hole 14b.

The method of supplying gas in a fuel cell that utilizes this separator will be explained next.

First, Fig. 1 will be used to explain the method of supplying oxidant gas during rated operation. Oxidant gas flows in parallel along the following two paths: the path from arrow A to A' (i.e., the path from first inlet-side manifold hole 11A, via first gas flow channel 21a, to first outlet-side manifold hole 13a) and the path from arrow B to B' (i.e., the path from second inlet-side manifold hole 11b; via second gas flow channel 21b, to second outlet-side manifold hole 13b).

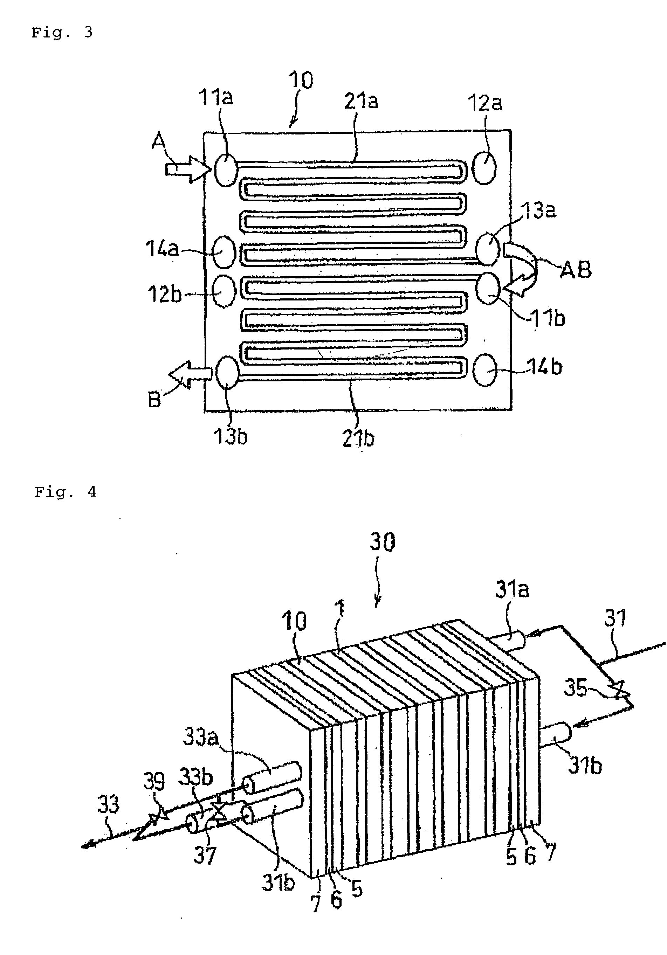

Next, during operation at one-half the rated load, as shown in Fig. 3, the aforementioned two paths (i.e., first gas flow channel 21a and second gas flow channel 21b) are connected in series. That is, as indicated by arrow AB, first outlet-side manifold hole 13a and second inlet-side manifold hole 11b are connected outside the cell. As a result, the gas that flows into first inlet-side manifold hole 11A from arrow A flows serially through first and second gas flow channels 21a, 21b, and is discharged to the outside at second outlet-side manifold hole 13b.

The fuel gas supply method is identical to the aforementioned method.

The piping for the oxidant gas of a laminated fuel cell equipped with a separator such as that aforementioned is shown in Fig. 4. This fuel cell 30 is composed of a cell stack in which MEA 1 and separator 10 are laminated alternately, pairs of collector plates 5, insulating plates 6, and end plates 7 that enclose these, and a fastening means that integrates these. Pipe 31 connected to the oxidant gas supply source branches to first pipe 31a and second pipe 31b having valve 35. First pipe 31a is connected to the manifold provided in the fuel cell, in communication with first inlet-side manifold hole 11A of separator 10, and second pipe 31b is connected to the manifold provided in the fuel cell, in communication with second inlet-side manifold hole 11b of separator 10. Similarly provided are pipes 33a and 33b that are connected to the manifold in communication with first outlet-side manifold hole 13a and second outlet-side manifold hole 13b, respectively, of separator 10. Valve 39 is connected to pipe 33a, and this and pipe 33b are connected to outlet-side pipe 33. One end of pipe 31b is connected, via bypass valve 37, to pipe 33a.

To simplify, only the cathode-side piping is shown in Fig. 4, but the anode-side piping also can be configured similarly by disposing it in symmetrical positions. Pipes 31a, 31b branching from pipe 31 and pipes 33a, 33b connected to pipe 33 have the same diameter and are configured so as to enable uniform gas distribution in the divided pipes. Here, to distribute gas uniformly, it is important to equalize the lengths of the bipartite pipes to equalize the pressure drop in each pipe. At the same time, for the uniform distribution of gas, it is important to equalize the pressure drops in the two independent gas flow channels by equalizing the lengths of the two gas flow channels shown in Fig. 1.

When this fuel cell is operated at the rated load, valves 35, 39 are opened and bypass valve 37 is closed. The oxidant gas supplied from valve 31 is supplied to the first and second gas flow channels, from pipes 31a and 31b and via manifold holes 11A and 31b, respectively; and is discharged, via pipes 33a and 33b to pipe 33. Also, during operation at one-half the rated load, valves 35, 39 are closed, and bypass valve 37 is open. After flowing from pipe 31a and through the first gas flow channel, the oxidant gas flows from pipe 33a, through bypass valve 37 and pipe 31b, and through the second gas flow channel, after which it is discharged from pipe 33b to pipe 33.

Here, the cooling water flow channel is omitted, so the cooling water manifold holes are omitted in Fig. 1 and 2. However, as in the case of the gas flow channels, the cooling water flow channel is divided into multiple sections, and as in the case of gas flow channel switching, it can be structured so as to switch according to the load. The aforementioned separator doubles as both the cathode-side separator plate and anode-side separator plate, but it is possible to configure a cooling water-based cooling block as follows. Between MEAs, a combined separator is inserted appropriately, said separator combining (1) a cathode-side separator such that an oxidant gas flow channel like that in Fig. 1 is formed on one surface and the cooling water channel is formed on the other surface and (2) an anode-side separator such that a fuel gas flow channel like that in Fig. 2 is formed on one surface and the cooling water channel is formed on the other surface, so that the cooling water flow channels face each other. From this gas channel configuration, it would be easy for a person skilled in the art to configure cooling water flow channels divided into multiple sections. Furthermore, if a cooling block is not provided for each cell, it need not be divided into multiple sections, as in the case of the gas flow channels.

### Embodiment 2

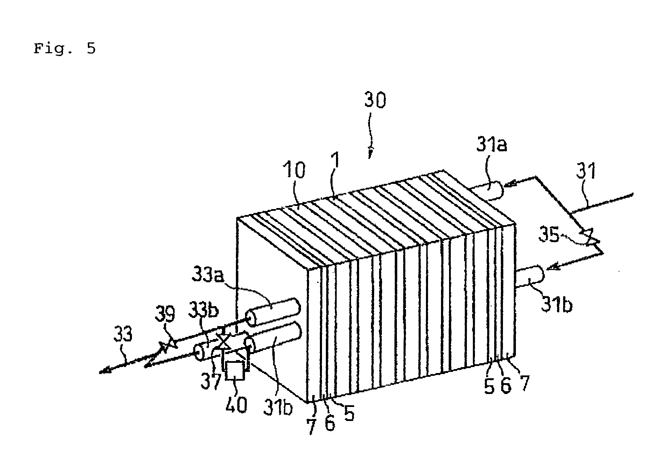

In the present embodiment, as shown in Fig. 5, mist trap 40 is inserted into the pipe that connects the first outlet-side manifold (hole) and the second inlet-side manifold (hole) in Embodiment 1. When the reactant gas is supplied so that the relative humidity becomes almost 100%, the reactant gas is charged with considerable mist resulting from the generated water, condensed water, etc., after passing through the first gas flow channel. When this mist is supplied to the subsequent gas flow channel, there is a high risk of flooding caused by mistinduced blockage of the gas flow channel. Therefore, floodless, highly reliable operation is enabled by inserting a mist trap, so that once the mist has been discharged from the separator via the upstream first gas flow channel outlet, it is not resupplied to the downstream gas flow channel. The water trapped by this mist trap also can be recovered by the system and reused. A commercial mechanical mist trap (e.g., the one used in Example 2) or a wick-shaped one made of fiber and having a water-absorbing effect (e.g., kite string) also can be used as the mist trap.

### Examples

Next, examples of the present invention will be explained.

### Example1

The cathode catalyst was prepared by supporting 25 wt% platinum particles (average particle diameter: 30 Å) on acetylene black carbon particles, and the anode catalyst was prepared by supporting 25 wt% platinum-ruthenium alloy particles (average particle diameter: 30 Å) on acetylene black carbon particles. These catalyst particles were dispersed in isopropanol, and this was mixed into an ethyl alcohol dispersed solution of perfluorocarbon sulfonic acid powder(Flemion (registered) manufactured by Asahi Glass Co., Ltd.), thereby preparing paste-form inks. With these inks as raw materials, a screen-printing method was used to coat the surface of one surface of a carbon nonwoven fabric (thickness: 250 µm), thereby forming each catalyst layer. The platinum content of these catalyst layers was set to 0.3 mg/cm², and the amount of perfluorocarbon sulfonic acid was set to 1.2 mg/cm².

An anode and cathode made by forming a catalyst layer on a carbon nonwoven fabric (Code number TGP-H-090 manufactured by Toray Industries, Inc.) as aforementioned are bonded to both sides of the central portion of a hydrogen ion-conductive polymer electrolyte membrane (Navion 112 (registered) manufactured by DuPont, USA) with an area slightly larger than an electrode, by hot-pressing so that each catalyst layer contacts the electrolyte film. Hot-pressing was used to bond a gasket composed of a fluorocarbon rubber sheet (thickness: 250 µm) to the electrolyte membrane part exposed at the outer edge of the electrode. In this manner, a membrane-electrode assembly (MEA) was manufactured. The used polymer electrolyte membrane was manufactured by forming perfluorocarbon sulfonic acid into a thin membrane (thickness: 30 µm).

The electrically conductive separator was manufactured by using machining to form the gas flow channels and manifold holes in an isotropic graphite material (thickness: 3 mm), and the structure is as shown in Fig. 1 and Fig. 2. For each gas flow channel, the groove width was set to 2 mm, the depth to 1 mm, and the inter-groove rib width to 1 mm, and each was given a single-pass gas flow channel configuration. Also, although not shown in Fig. 1 or Fig. 2, the cooling water flow channel also was divided so as to correspond with the gas flow channel.

Next, a fuel cell like that in Fig. 4, which was formed by laminating 50 cells, was assembled by alternately laminating the aforementioned electrically conductive separators and MEAs. The collector plate was a copper plate with a gold-plated surface; the insulating plate was a polyphenylene sulfide plate; and the end plate was made of stainless steel. The, fastening pressure for the laminated cell was set to 10 kgf/cm² per unit area of electrode, and the laminated cell was configured so that the top of the separator shown in Fig. 1 is up.

The rated operating conditions of this cell were 75% fuel utilization, 40% oxygen utilization, and 0.3-A/cm² current density.

The solid polymer fuel cell of the present example, which was manufactured in this manner, was maintained at 70°C; heated fuel gas humidified to a dew point of 70 °C was supplied to the anode; and heated air humidified to a dew point of 70 °C was supplied to the cathode. The fuel gas was composed of 80% hydrogen gas, 20% carbon dioxide, and 10-ppm carbon monoxide.

The current-voltage characteristic was evaluated by varying the current density of this cell from a current density of 0.075 A/cm², which was a low load equivalent to 25% of the rated load, to 0.3 A/cm², which was the rated load. However, the utilization during tests was set to that for the rated conditions. The results are shown in Fig. 5. For comparison, the characteristic of a conventional fuel cell (i.e., the cell of Example 1, which used a separator with a single-pass gas flow channel configuration) also was included in Fig. 5. In the present example, tests were conducted after switching to ≤0.15 A/cm² for the serial flow channels and to ≥0.15 A/cm² for the parallel flow channels.

From Fig. 5, it is evident that the fuel cell of the present example can operate stably, without flooding, even near 0.075 A/cm², where operation was difficult because flooding occurred as the result of the drop in the gas flow rate in the cell of Comparative Example 1. In this example, two independent flow channels were used, but if the pressure drops in each flow channel are comparable, then it also is possible to adopt a configuration having at least three independent flow channels.

### Example 2

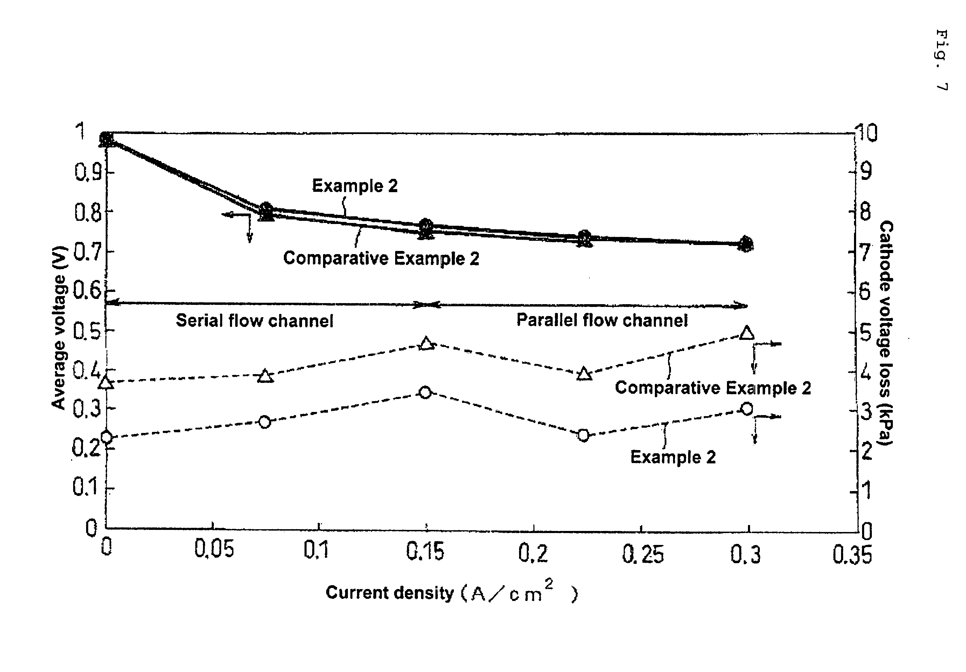

In the present example, as shown in Embodiment 2, a cell similar to that in Example 1, except for the insertion of a mist trap, was manufactured. A commercial mechanical mist trap (1-LDC, Armstrong International, Inc.) was used as the mist trap. The current-voltage characteristic of this cell was measured under the same conditions as in Example 1. Here, the pressure drop of the entire flow channel in Example 2 was designed to be approximately 60% of the pressure drop of the entire flow channel in Example 1. The results are shown in Fig. 7. From Fig. 7, Example 2 confirms that it is possible to obtain stable cell output at a low pressure drop.

### Example 3

The separator preferably is configured as in Fig. 1, and the cell preferably is installed so as to be disposed as in Fig. 1. In the previous examples, when the two gas flow channels are switched from serial connection to parallel connection, the gas flows in the direction opposite to the gas flow direction during serial connection, so the gas flow direction opposes the force of gravity. When gas is flowed in the direction opposite to the force of gravity, the water drops that develop in the flow channel must be moved against the force of gravity, so the pressure drop increases relative to the case where the gas flows in the direction of the force of gravity. Therefore, nonuniformity occurs in the pressure drop of each independent flow channel. As a result, nonuniformity occurs in the distribution of reactant gas flow volumes. In regions where gas flows in the direction opposite to the force of gravity, blockage occur easily in the gas flow channel as the result of water droplets, so the possibility of flooding becomes very high. Also, the temperature distribution within a cell surface normally is determined by the direction of flow of the cooling water, so it is desirable align the directions of flow of the cooling water and the gas, to reduce the temperature in the gas inlet region and to raise the temperature in the gas outlet region. By adopting such a structure, it is possible to smoothly discharge the large volumes of generated water that occur in the vicinity of the outlets. That is, the following state results: If the gas flow direction changes, the correlation with temperature distribution is broken, and water-clogging occurs more readily.

Here, in the present example, as in Example 1, the separator is configured as in Fig. 1, and the cell is installed so as to be disposed as in Fig. 1. According to the present example, even after a gas flow channel is switched to parallel, the gas flow direction does not change, so flooding always is inhibited, which yields stable operation.

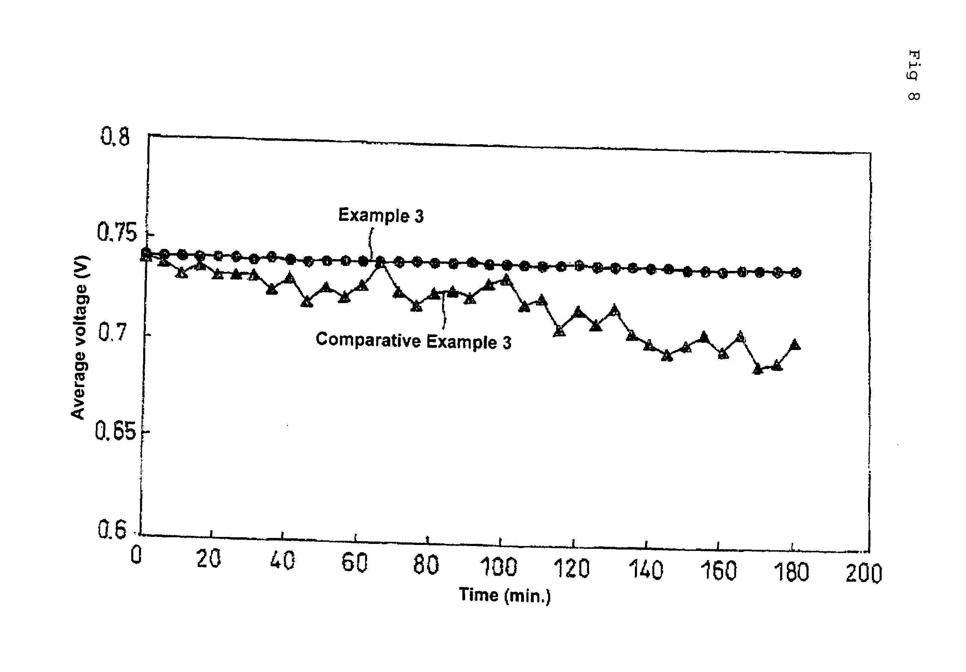

Fig. 8 shows the change in voltage over time, when this cell was operated at one-half the rated load and under the same conditions as in Example 1. Fig. 8 also shows, as Comparative Example 3, the characteristic after the inlet and outlet of the second gas flow channel were forcibly reversed and gas flowed in the direction opposite to the force of gravity. From Fig. 8, it is evident that stable operation can be enabled easily and reliably by always flowing gas in a direction that does not oppose the flow of gravity.

### Embodiment 3

Fig. 9 and Fig. 10 show cathode-side separator 110A and anode-side separator 120A that make up cell A. Separator 110A has oxidant gas manifold holes 111A, 113A, and 115A, as well as fuel gas manifold holes 112A, 114A, and 116A, and has gas flow channel 17A that connected manifold holes 111A and 115A on the side facing the cathode. On the other hand, separator 120A had fuel gas manifold holes 122A, 124A, and 126A, as well as oxidant gas manifold holes 121A, 123A, and 125A; and has gas flow channel 28A that connected manifold holes 122A and 126A on the side facing the anode.

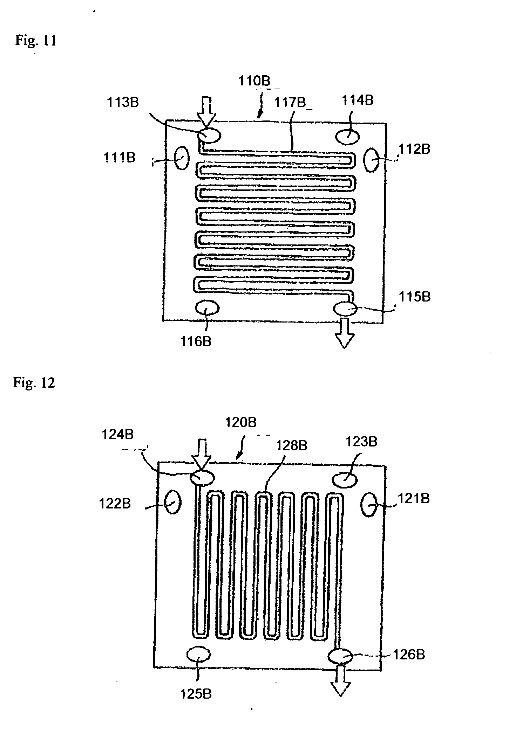

Fig. 11 and Fig. 12 show cathode-side separator 110B and anode-side separator 120B that made up cell B. Separator 110B has oxidant gas manifold holes 111B, 113B, and 115B, as well as fuel gas manifold holes 112B, 114B, and 116B; and has gas flow channel 117B that connected manifold holes 113B and 115B on the side facing the cathode. On the other hand, separator 120B has fuel gas manifold holes 122B, 124B, and 126B, as well as oxidant gas manifold holes 121B, 123B, and 125B; and had gas flow channel 128B that connected manifold holes 124B and 126B on the side facing the anode.

The membrane-electrode assembly (MEA) integrated into the aforementioned separator is composed of a polymer electrolyte membrane of the same size as the separator, a pair of gas diffusion electrodes (i.e., cathode, anode) that enclose the aforementioned electrolyte membrane, and a pair of gaskets that enclose the electrolyte membrane of the part that protruded from the periphery of the electrode.

Cell A was constructed by enclosing this MEA with separators 110A and 120A. Similarly, cell B was constructed by enclosing the MEA with separators 110B and 120B.
The cell laminate was constructed by alternately laminating the aforementioned cell A and cell B.

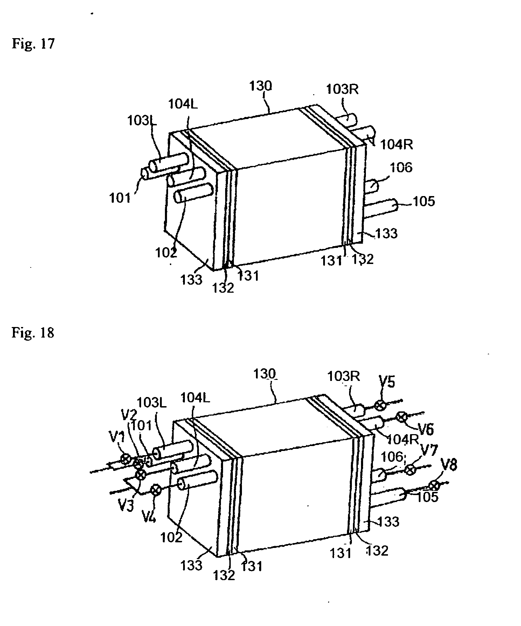

A fuel cell that used the aforementioned cell laminate is shown in Fig. 17. Cell laminate 130 was fastened by means of a bolt (not shown), after using end plates 133 to enclose the cell laminate via collector plate 131 and insulating plate 32 on both sides. On one end plate were installed manifold 101 that communicated with manifold holes 111A, 111B, 121A, and 121B for the oxidant gas of the separator, manifold 103L that communicated with manifold holes 113A, 113B, 123A, and 123B for oxidant gas, manifold 102 that communicated with manifold holes 112A, 112B, 122A, and 122B for fuel gas, and manifold 104L that communicated with manifold holes 114A, 114B, 124A, and 124B for fuel gas. On the other end plate were installed manifold 3R that communicated with manifold holes 113A, 113B, 123A, and 123B for oxidant gas, manifold 104R that communicated with manifold holes 114A, 114B, 124A, and 124B for fuel gas, manifold 105 that communicated with manifold holes 115A, 115B, 125A, and 125B for oxidant gas, and manifold 106 that communicated with manifold holes 116A, 116B, 126A, and 126B for fuel gas.

Next, the method used to supply oxidant gas and fuel gas during the operation of this fuel cell will be explained.

First, during rated load operation, power was generated by supplying in parallel both oxidant gas and fuel gas to cells A and B. That is, manifold 103R was closed and oxidant gas was supplied uniformly in manifolds 101 and 3L. As a result, as indicated by the arrows in Fig. 9, in separator 110A the oxidant gas flowed from manifold hole 111A and through gas flow channel 17A, after which it was discharged from manifold hole 115A. Similarly, as indicated by the arrows in Fig. 11, in separator 110B the oxidant gas flowed from manifold hole 113B and through gas flow channel 17B, after which it was discharged from manifold hole 115B.

On the other hand, manifold 104R was closed and fuel gas was supplied uniformly in manifolds 2 and 4L. As a result, as indicated by the arrows in Fig. 10, in separator 120A the fuel gas flowed from manifold hole 122A and through gas flow channel 128A, after which it was discharged from manifold hole 126A. Similarly, as indicated by the arrows in Fig. 12, in separator 120B the fuel gas flowed from manifold hole 124B and through gas flow channel 128B, after which it was discharged from manifold hole 126B.

As aforementioned, power was generated by supplying in parallel oxidant gas and fuel gas to cells A and B, respectively.

Next, during operation at one-half the rated load, manifolds 103L, 104L, 105, and 106 were closed, oxidant gas was supplied in manifold 101, and fuel gas was supplied in manifold 102. As explained hereinafter, the oxidant gas and the fuel gas were flowed in series in cells A and B, respectively, after which they were discharged from manifolds 103R and 104R.

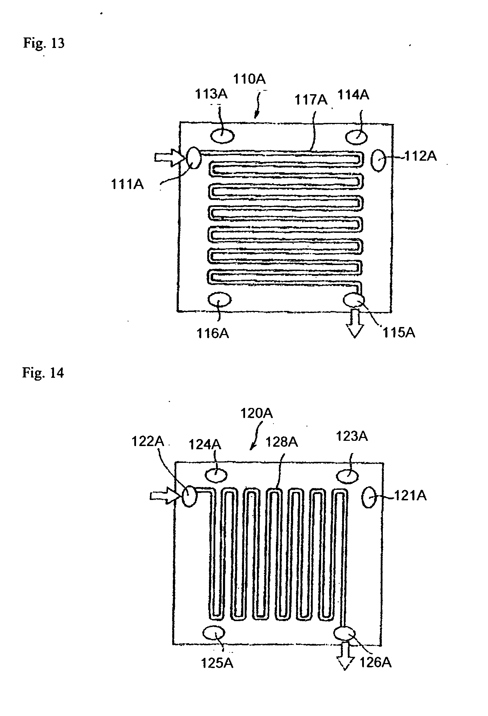

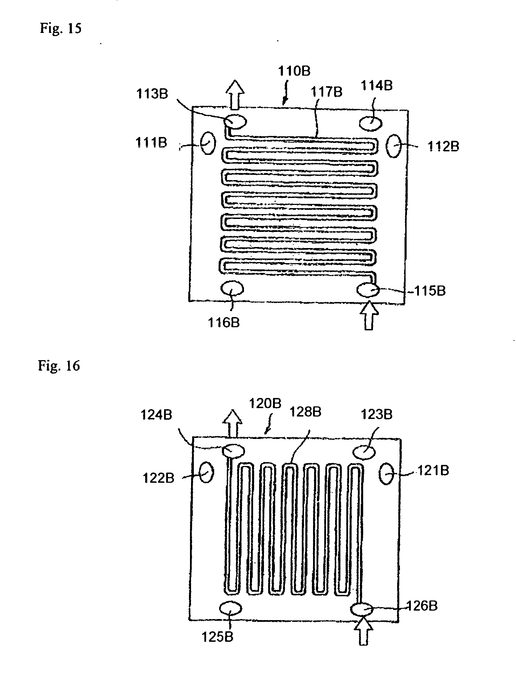

As shown in Fig. 13, the oxidant gas supplied in manifold 101 flowed from manifold hole 111A of separator 110A and through gas flow channel 117A, after which it was discharged at manifold hole 115A. Next, as indicated by the arrows in Fig. 15, it entered manifold hole 115B of separator 110B, flowed through gas flow channel 117B, and was discharged from manifold hole 113B.

Similarly, as indicated by the arrows in Fig. 14, the fuel gas supplied in manifold 102 flowed from manifold hole 122A of separator 120A and through gas flow channel 128A, after which it was discharged at manifold hole 126A. Next, as shown in Fig. 16, it entered manifold hole 126B of separator 120B, flowed through gas flow channel 128B, and was discharged from manifold hole 124B.

In these manners, the oxidant gas and fuel gas flowed in series to cells A and B, respectively.

### Embodiment 4

The overall configuration of the fuel cell in the present embodiment is shown in Fig. 18. It differs from Embodiment 3 in that a valve is provided in each manifold pipe. Oxidant gas inlet-side manifolds 101 and10 3L are connected to the single oxidant gas supply pipe, via valves V2 and V1, respectively. Valves V5 and V8 are provided in oxidant gas inlet-side manifold 103R and outlet-side manifold 105, respectively. Fuel gas inlet-side manifolds 102 and 104L are connected to the single fuel gas supply pipe, via valves V4 and V3, respectively. Valves V6 and V7 are provided in fuel gas inlet-side manifold 104R and outlet-side manifold 106, respectively.

In this configuration, when oxidant gas was supplied, in parallel, to cells A and B, valves V1, V2, and V8 were opened and valve V5 was closed, oxidant gas was supplied via manifolds 101 and 103L, respectively, and it was discharged from manifold 105. Similarly, valves V3, V4, and V7 were opened and valve V6 was closed, fuel gas was supplied via manifolds 102 and 104L, and it was discharged from manifold 106.

On the other hand, when oxidant gas was supplied in series to cells A and B, valves V2 and V5 were opened and valves V7 and V8 were closed, oxidant gas was supplied via manifold 101, and it was discharged from manifold 103R. Also, valves V4 and V6 were opened and valves V3 and V7 were closed, fuel gas was supplied via manifold 102, and it was discharged from manifold 104R.

In the aforementioned embodiment, each separator was used individually. However, it also is possible to create a separator that functions as a cathode-side separator on one side and functions as an anode-side separator on the other side. For example, when cell A and cell B are disposed adjacently, the back of the cathode-side separator of cell A functions as the anode-side separator of cell B. Also, in the aforementioned embodiment, the cooling water manifold holes for cell cooling are omitted for convenience of explanation. The cooling block normally is configured by forming the cooling water flow channel on the sides facing the cathode-side separator and the anode-side separator. This cooling block is provided for each cell or for every 2-3 cells.

### Examples

Next, further examples of the present invention will be explained.

### Example 4

25 wt% of platinum particles (average particle diameter: 30 Å) were supported on acetylene black carbon powder. This was used as the cathode catalyst. Also, 25 wt% of platinum-ruthenium alloy particles (average particle diameter: 30 Å) were supported on acetylene black carbon powder. This was used as the anode catalyst. An ethyl alcohol dispersed solution of perfluorocarbon sulfonic acid powder was mixed into an isopropanol dispersed solution of these catalyst powders, thereby preparing paste forms. With these pastes as raw materials, a screen-printing method was used to coat one surface of a carbon nonwoven fabric (thickness: 250 µm), after which this was dried, thereby forming the cathode catalyst layer and the anode catalyst layer, respectively. The platinum content of the obtained catalyst layers was set to 0.3 mg/cm², and the amount of perfluorocarbon sulfonic acid was set to 1.2 mg/cm².

Regarding the electrodes composed of carbon nonwoven fabric having these catalyst layers, the structure, other than the catalyst materials, was identical for both the cathode and anode electrodes. These electrodes were bonded to both sides of the central portion of a hydrogen ion-conductive polymer electrolyte membrane having an area slightly larger than an electrode, by hot-pressing so that the printed catalyst layer contacts the electrolyte membrane. Furthermore, a gasket made by cutting out to a given size a 250-µm-thick sheet of elastomer (Viton AP made by DuPont; hardness: 500) was disposed on both sides of the electrolyte membrane exposed at the periphery of the aforementioned electrode, after which hot-pressing was used to bond and integrate. In this manner, MEAs were manufactured.

A thin membrane (thickness: 30 µm) of perfluorocarbon sulfonic acid was used as the hydrogen ion-conductive polymer electrolyte membrane.

In the present example, separators 110A, 110B, 120A, and 120B shown in Fig. 1-4 were used. For these separators, machining was used to form the gas flow channels and manifold holes in an isotropic graphite sheet (thickness: 3 mm). The gas channel groove width and depth were set to 2 mm and 1 mm, respectively; the width of the rib between the gas flow channels was set to 1 mm; and each gas flow channel was single-pass gas.

A 50-cell laminate was constructed by alternately laminating cell A, which combines cathode-side separator 110A and anode-side separator 120A on the aforementioned MEA, and cell B, which combines cathode-side separator 110B and anode-side separator 120B on the MEA. The cell laminate was enclosed within stainless-steel end plates, via collector plates composed of a gold-plated copper sheet and polyphenylene sulfide insulating plates, after which both end plates were fastened by means of a fastening rod. The fastening pressure was set to 10 kgf/cm² per unit area of electrode. Also, the laminated cell was configured such that the tops of the separators shown in the figures were up.

Next, the actual operating method for a cell that used this cell laminate will be explained. As was explained in the previous embodiment, when a cell was operated under the rated conditions, both oxidant gas and fuel gas were supplied, in parallel, to cell A and cell B. Also, during low-load operation at 50% max. of the rated load, oxidant gas and fuel gas were supplied in series to cell A and cell B, respectively. The rated operating conditions for this cell were 75% fuel utilization, 40% oxygen utilization, and 0.3-A/cm² current density.

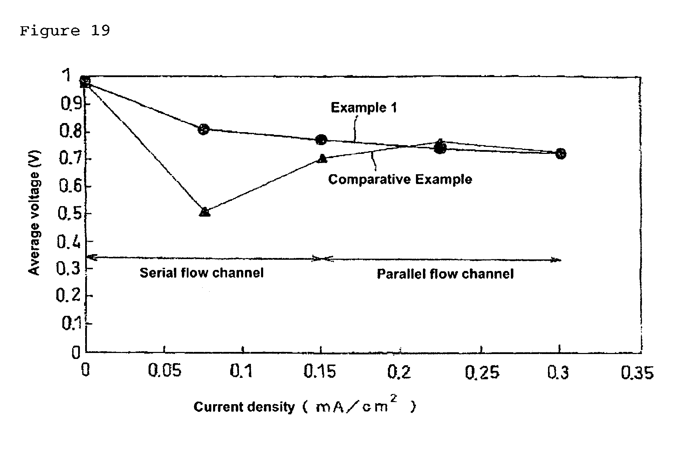

This fuel cell was maintained at 70 °C. After being humidified to the 70 °C dew point and then heated, gas consisting mainly of hydrogen (80% hydrogen gas, 20% carbon dioxide, 10 ppm carbon monoxide) was supplied to the anode. After being humidified to the 70 °C dew point and then heated, air was supplied to the cathode. The current-voltage characteristic was evaluated by varying the current density of this cell from a current density of 0.075 A/cm², which was a low load equivalent to 25% of the rated load, to 0.3 A/cm², which was the rated load. However, the utilization during tests was set to that for the rated conditions. The results are shown in Fig. 19. For comparison, the characteristic of a conventional fuel cell (i.e., a cell in which only cell A was laminated) also was included in Fig. 19. In the present example, tests were conducted after switching to a current density ≤0.15 A/cm² for the serial flow channels and to a current density ≥0.15 A/cm² for the parallel flow channels. From Fig. 19, it is evident that, in the fuel cell of the present example, it was possible to operated stably, because there was no flooding, even in the vicinity of 0.075 A/cm², where operation is difficult in conventional cells because flooding occurs as the result of a decrease in the gas flow rate. In this example, two types of cells were used, but it also is possible to further increase the variety of serially connected cells by increasing the manifolds.

In the present example, valves were set up in the pipes, as in Embodiment 4. Tests similar to those in Example 4 were conducted after switching the gas supply by opening and closing valves. As a result, performance comparable to that in Example 3 was obtained.

### [Effects of the Invention]

According to the present invention as particularly embodied in embodiments 1 and 2, highly efficient and stable operation is enabled by eliminating the degradation of cell performance caused by flooding during low-load operation, and by inhibiting the increase in the pressure drop at high loads.

As aforementioned, according to the present invention as particularly embodied in embodiments 3 and 4, it is possible to operate while supplying reactant gas to at least two types of cells, by switching in series and in parallel, thereby eliminating the drop in cell performance as the result of flooding during low-load operation and thereby inhibiting the increase in pressure drop at high loads, which enables stable operation at high efficiency. Also, simple switching is enabled by providing a switching means that opens and closes the connection channels of the inlet-side manifolds and outlet-side manifolds, which conduct fuel gas and oxidizing gas, respectively. Highly efficient and stable cell operation becomes possible by means of simple control, by adopting a configuration in which is operated a switching means that opens and closes the aforementioned channels in accordance with the amount of power generated by the fuel cell.

### [Explanation of Symbols]

- 1: MEA
- 5: Collector plate
- 6: Insulating plate
- 7: End plate
- 10: Electrically conductive separator
- 11A, 11b: Oxidant gas inlet-side manifold holes
- 12a, 12b: Fuel gas inlet-side manifold holes
- 13a, 13b: Oxidant gas outlet-side manifold holes
- 14a, 14b: Fuel gas outlet-side manifold holes
- 21a: First oxidant gas flow channel
- 21b: Second oxidant gas flow channel
- 22a: First fuel gas flow channel
- 22b: Second fuel gas flow channel
- 30: Fuel cell
- 31: Pipe connected to supply source
- 31a, 31b: Branch pipes
- 33a, 33b: Outlet-side branch pipes
- 33: Outlet-side pipe
- 35, 37, 39: Valves
- 40: Mist trap
- 101, 103L, 103R, 105: Oxidant gas manifold
- 102, 104L, 104R, 106: Fuel gas manifold
- 110A, 110B: Cathode-side separator
- 120A, 120B: Anode-side separator
- 111A, 111B, 121A, 121B: Oxidant gas inlet-side manifold holes
- 113A, 113B, 123A, 123B: Oxidant gas inlet-side manifold holes
- 112A, 112B, 122A, 122B: Fuel gas inlet-side manifold holes
- 114A, 114B, 124A, 124B: Fuel gas inlet-side manifold holes
- 115A, 115B, 125A, 125B: Oxidant gas outlet-side manifold holes
- 116A, 116B, 126A, 126B: Oxidant gas outlet-side manifold holes
- 130: Cell laminate
- 131: Collector plate
- 132: Insulating plate
- 133: End plate

## Claims

1. A polymer electrolyte fuel cell including a stack of cells each comprising
a polymer electrolyte membrane,
a pair of electrodes sandwiching said membrane,
a pair of electrically conducting separators sandwiching said pair of electrodes and provided with first channel means fed by fuel gas as first type of fluid and second channel means fed by oxidant gas as second type of fluid, and
manifold means connected to said first and second channel means for supplying/discharging said two types of fluids, and
switching means for selectively switching two or more channel means fed by substantially the same type of fluids between two operational modes in which they are connected in parallel or in series,
**characterized in that**
the inlets and outlets of such switchable channel means are maintained in both operational modes in a manner that in both operational modes the switchable channel means are fed by their fluid in the same direction of circulation.

2. The polymer electrolyte fuel cell according to claim 1, wherein in serial operation of an upstream channel means and a downstream channel means the outlet of the upstream channel means is connected to the inlet of the downstream channel means, which inlet of the downstream channel means is used in parallel operation as inlet as well.

3. The polymer electrolyte fuel cell according to claim 1 or 2, wherein all channel means of the same type are adapted to be switched in parallel or series.

4. The polymer electrolyte fuel cell according to one of claims 1 to 3, wherein the switching means are arranged outside of the stack.

5. The polymer electrolyte fuel cell according to claim 4, wherein in serial operation of an upstream channel means and a downstream channel means the outlet of the upstream channel means is connected to the inlet of the downstream channel means by a pipe arranged at the outside of the stack.

6. The polymer electrolyte fuel cell according to one of claims 1 to 5, wherein in serial operation of an upstream channel means and a downstream channel means a mist trap is connected between.

7. The polymer electrolyte fuel cell according to one of claims 1 to 6, wherein the cell stack is configured and oriented in such a manner that there are no forces of gravity acting against the fluid flow.

8. The polymer electrolyte fuel cell according to one of claims 1 to 7, wherein said channel means adapted to be switched in parallel of series are included in different cells.

9. The polymer electrolyte fuel cell according to one of claims 1 to 8, wherein said channel means adapted to be switched in parallel of series are included in same cells.
